# EUROPEAN PATENT APPLICATION

(11) **EP 2 000 253 A1**
(43) Date of publication of application: **10.12.2008**
(21) Application number: 07011134.9
(22) Date of filing: 06.06.2007
(51) Int. Cl.: B23P 19/06, B25B 29/02, F16B 31/04, F01D 5/06

(54) **Tensioning tool and tensioning rod**

(71) Applicant: SIEMENS AKTIENGESELLSCHAFT, 80333 München (DE)
(72) Inventor: Knowles, Grahame, LN6 3LN Lincoln (GB)

(57) **Abstract**

A tensioning tool (1) for tensioning a tensioning rod (3) of a turbine rotor is provided. The tensioning rod extends through a flange (7) of the rotor and is equipped with a circumferential face at or near an axial end of the tensioning rod which comprises at least two gripping areas (23). The tensioning tool (1) comprises a gripping arrangement (19, 21) which is designed such as to apply a radial gripping force to the gripping areas (23) and at least one tensioning ram (13) which is arranged and designed such as to allow it to be pressed against the flange (7) of the rotor. The gripping arrangement (19, 21) is linked to the at least one tensioning ram (13) so that it moves in the longitudinal direction of the tensioning rod (3) when the tensioning ram (13) is actuated.

## Description

The present invention relates to a tensioning tool for tensioning a tensioning rod of a turbine rotor. In addition, the invention relates to a tensioning rod for a turbine rotor.

In modern gas turbines the rotors are often assembled from discs in the compressor section and the turbine section. These discs, which carry the compressor blades and turbine blades, are fixed to each other by bracing. To brace the discs one or more tensioning rods extend through openings in the discs. Each tensioning rod is fixed to a first rotor stub shaft at one of its axial ends. The opposite end of the tensioning rod extends through a second rotor stub shaft. Then a tensioning force is applied to the end extending through the second rotor stub shaft and, while applying the tensioning force, a counter nut is screwed onto the end of the tensioning rod. After the counter nut has been screwed onto the rod the tensioning force is released so that the tensioning rod tends to contract again. This contraction forces both rotor stub shafts to move towards each other so as to press the rotor discs onto each other.

US 5,463,812 describes a tensioning tool for applying a tensile force to a tensioning rod of a turbine rotor. This device comprises a hydraulic ram which can be screwed to an axial end of a tensioning rod. The tensile force is then applied hydraulically to the tension rod.

According to the state of the art it is an objective of the present invention to provide an improved tensioning tool and a tensioning rod which is particularly adapted to the special tensioning tool.

This objective is solved by a tensioning tool according to claim 1 and by a tensioning rod according to claim 9. The depending claims contain further developments of the present invention.

An inventive tensioning tool can be used for tensioning a tensioning rod of a turbine rotor where the tensioning rod extends through a flange of the rotor and is equipped with a circumferential face with at least two gripping areas at or near an axial end of the tensioning rod. The tensioning tool comprises a gripping arrangement and at least one tensioning ram. The gripping arrangement is designed such as to apply a radial gripping force to the gripping areas of the circumferential face. The at least one tensioning ram is arranged and designed such as to allow it to be pressed against the flange of the rotor. The gripping arrangement is linked to the at least one tensioning ram so that it moves in the longitudinal direction of the tensioning rod when the tensioning ram is actuated. For actuating the gripping arrangement and/or the tensioning ram hydraulic, mechanical, electrical or pneumatic means are generally suitable. In particular, hydraulic actuation is advantageous due to its ability to easily produce high pressures which in turn can be used to produce high forces.

The gripping areas may, in particular, be flat areas. However, other configurations, for example concave, convex, square, circular, etc. with or without teeth, pins, keys, etc are also possible. Moreover, the gripping areas may be inclined towards the centre of the tensioning rod and/or towards the nut. The gripping arrangement would then comprise gripping faces which are configured complementary the configuration of gripping areas. This would increase the security and would offer the possibility to individualize tensioning tools for particular kinds of tensioning rods so as to assure that only the correct tool can be used for a turbine rotor equipped with this particular kind of tensioning rod. In other words, the tensioning tool could function as a "key" for said particular kind of tensioning rod without which a disassembly could not take place.

Contrary to the state of the art the gripping arrangement is not screwed onto the axial end of the tensioning rod but grips by the radial force applied to the gripping areas in the circumferential face of the tensioning rod. Therefore, a thread at the axial end of the tensioning rod cannot be compromised by the grip. Moreover, the gripping force can, in general, be set fully independently from the tensioning force.

The gripping arrangement may, in particular, comprise at least two gripping rams which are arranged and designed such as to allow them to be pressed against the gripping areas in the radial direction of the tensioning rod. It is particularly advantageous if at least three gripping rams are present so that the tensioning rod is secured against slipping out of the grip in radial direction of the tensioning rod. In general, the use of gripping rams allows the gripping force to be selectively applied to the gripping areas.

In case the gripping arrangement and the tensioning ram are hydraulically actuated they may both be supplied with a hydraulic fluid of the same pressure. This keeps the fluid circuit rather simple.

A conduit system for delivering the pressurised hydraulic fluid to the gripping arrangement and to the at least one tensioning ram may comprise a first branch leading to the gripping arrangement and a second branch leading to the at least one tensioning ram. A valve is then present in the second branch which is designed such as to open the second branch when the pressure in the hydraulic fluid exceeds a predefined value. Such a valve assures that the tensioning ram is not actuated before a certain gripping force is applied to the tensioning rod. This gripping force is given by the predefined pressure value at which the valve opens.
As long as the fluid pressure does not exceed this pressure value, the valve is closed so that only the gripping arrangement is actuated but not the tensioning ram. Only if the fluid pressure exceeds the predefined value, which should be chosen such as to assure sufficient gripping force acting on the tensioning rod, the tensioning ram begins to apply a tensile force to the tensioning rod. The valve may, in particular, be implemented as a pressure sequence valve.

An inventive tensioning rod for a turbine rotor comprises an axial end and a circumferential face at or near the axial end. The circumferential face is equipped with at least two gripping areas and, advantageously, with at least three gripping areas. Such a tensioning rod is particularly suitable for being tensioned with the inventive tensioning tool.

The gripping areas may, in particular, be flat areas. However, other configurations, for example concave, convex, square, circular, etc. with or without teeth, pins, keys, etc are also possible. Moreover, the gripping areas may be inclined towards the centre of the tensioning rod and/or towards the nut, i.e. towards the axial end of the tensioning rod.

Further features, properties and advantages of the present invention will become clear from the following description of an embodiment in conjunction with the accompanying drawings.

Figure 1 shows the inventive tensioning tool and the inventive tensioning rod in a sectional view along the longitudinal axis of the rod.

Figure 2 shows a view onto the axial end of the tensioning rod in the longitudinal direction of the rod with the tensioning tool fixed to the rod.

Figure 3 shows a diagram of the hydraulic circuit of the tensioning tool.

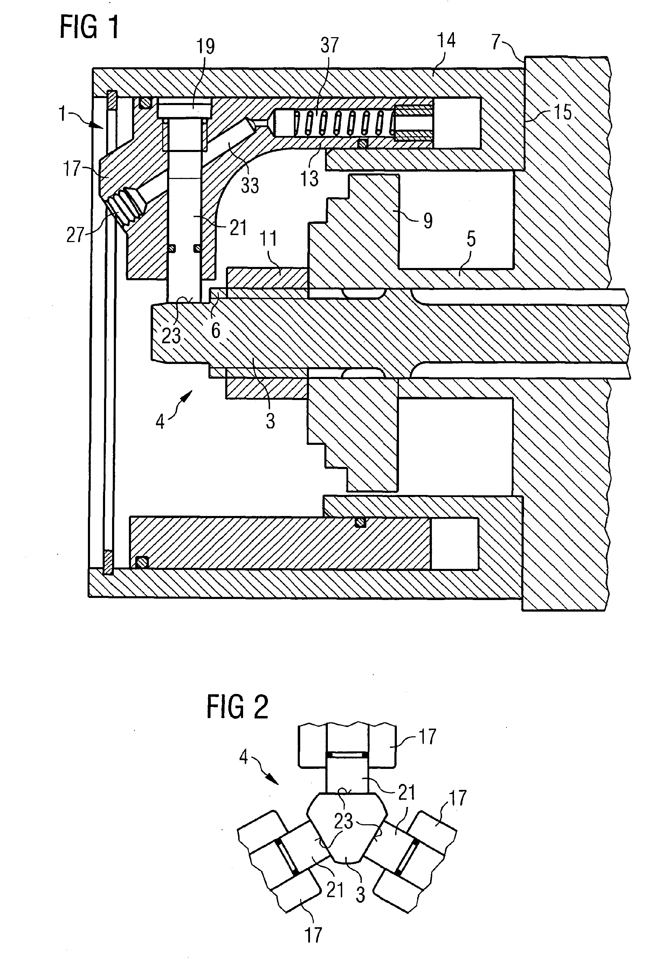

The inventive tensioning tool and the inventive tensioning rod will now be described with respect to Figures 1 and 2. While Figure 1 shows a section along the longitudinal direction of the tensioning rod, Figure 2 shows a view onto the axial end 4 of the tensioning rod 3.

As can best be seen in Figure 1 the tensioning rod 3 extends though a hollow rotor shaft part 5 which constitutes the axial end of the rotor shaft and comprises a flange 7 and a stub 9. A similar hollow rotor shaft part is present at the opposite end of the tensioning rod 3 (not shown). The tensioning rod 3 is screwed into the rotor shaft part at the opposite end so as to be fixed thereto.

At the end of the rotor shown in Figure 1 the tensioning rod 3 is not screwed into the rotor shaft part 5 but secured by a nut 11. This nut is screwed onto a threaded section 6 of the axial end 4 of the tensioning rod 3 so that the tensioning rod 3 is secured against being dragged through the rotor shaft part 5. In the present embodiment, flat surface sections 23 are present in the circumferential face at the axial end 4 of the rod 3.

Before the nut 11 is screwed onto the tensioning rod 3 to secure the rod 3 against the stub 9, a tensioning force is applied to the rod 3. By this measure it becomes possible to screw the nut further onto the rod 3 as it would be possible without tensioning the rod. Then after the screw 11 is screwed onto the tensioning rod 3 so as to abut the stub 9 the tensioning force is released. By this measure blade discs which are put on the tensioning rod 3 between the rotor shaft parts at the axial ends of the tensioning rod are braced so as to assure a momentum transfer between neighbouring blade discs.

A tensioning tool 1 is used for tensioning the tensioning rod 3. In the present embodiment this tool 1 comprises three tensioning rams 13 which are housed in three hydraulic cylinders 14. The hydraulic cylinders 14 are equipped with abutment faces 15 which are designed for abutting the flange of the rotor shaft part 5. Each tensioning ram 13 comprises a section 17 with a hydraulic cylinder 19 located therein. Such a hydraulic cylinder 19 comprises a longitudinal axis which is substantially perpendicular to the longitudinal axis of the hydraulic cylinder in which the tensioning ram 13 is located and radial with respect to the tensioning rod 3. Gripping rams are located moveably in the cylinders 19. When a pressurised hydraulic fluid is pressed into the cylinders 19 the gripping rams will be pressed against gripping areas in the circumferential face of the tensioning rod 3 which are, in the present embodiment, formed by the flat surface sections 23. By pressing the end faces of the gripping rams against these flat surface sections 23 a holding force is applied to the tensioning rod 3 which holds the rod 3 against the load applied by the tensioning ram 13.

Although the gripping areas are configured as flat surface sections in the present embodiment other configurations of the gripping areas are also possible, for example concave, convex, square, circular, etc. gripping areas with or without teeth, pins, keys, etc. Moreover, the gripping areas may be inclined towards the centre of the tensioning rod and/or towards the nut. If the gripping areas are configured other than flat and in particular when they comprise teeth, pins, keys, etc. the end faces of the gripping rams 21 would be configured complementary to the configuration of the gripping areas.

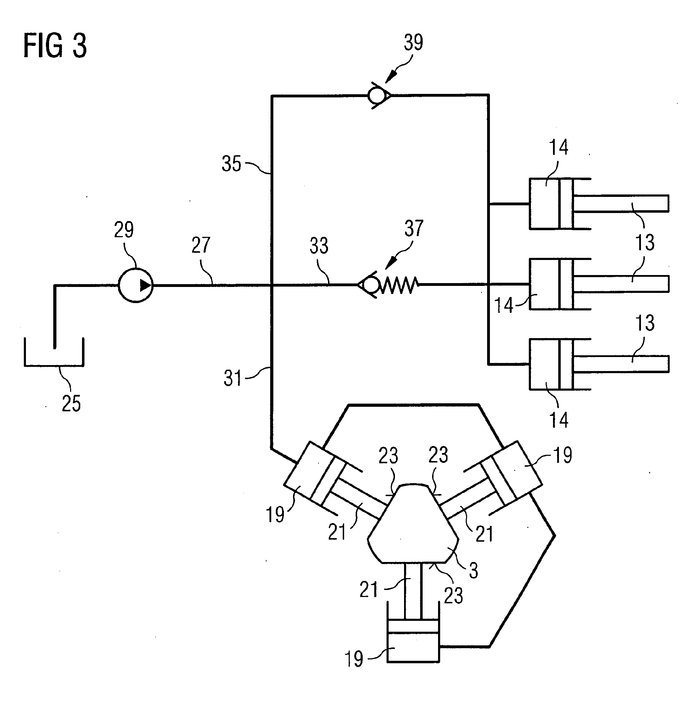

The hydraulic circuit realised in the present embodiment of the inventive tensioning tool 1 is shown in Figure 3. It comprises a reservoir 25 with a hydraulic fluid and a fluid conduit 27 in which a pump 29 is located. By the pump 29 the pressure within the fluid conduit 27 can be raised to a desired value. Three branch conduits 31, 33, 35 emanate from the fluid conduit 27. While the first branch conduit 31 leads to the hydraulic cylinders 19 within the section 17 of the tensioning rams 13 the second and third branches 33, 35 lead to the hydraulic cylinders 14 in which the tensioning rams 13 are arranged.

The second branch 33 contains a pressure sequence valve 37 which is implemented as a spring loaded check valve. The spring load may, in particular, be adjustable so as to allow for the adjustment of the pressure which is necessary to open the valve. The valve is directed such that it opens when the pressure provided by the pump 29 exceeds a predefined pressure value which is set by the spring force of the valve 37.

The third branch conduit 35 contains a further check valve 39 which opens when the pressure in the cylinders 14 exceeds the pressure in the conduit 27. The check valve 39 is used for releasing the pressure from the cylinders 14.

As long as the fluid pressure in the fluid conduit 27 is less than the predefined pressure value the hydraulic fluid is only pressed into the hydraulic cylinders 19 so as to act on gripping rams 21. Thereby, the gripping rams 21 are pressed against the flat surface areas 23 so as to apply a holding force to the tensioning rod 3. When the pressure provided by the pump 29 further increases it eventually reaches and exceeds the predefined pressure value. In the present embodiment, the spring force of the pressure sequence valve 37 is set such that it opens when the fluid pressure provided by the pump 29 exceeds 70 bar.

When the predefined pressure value is exceeded the pressure sequence valve 37 opens so that the pressurised fluid is from now on also led to the hydraulic cylinders 14 so as to force the tensioning rams 13 to move out of the cylinders 14, i.e. away from the flange 7 which the cylinders 14 abut. As the gripping rams are located in the tensioning rams 13 the gripping rams also move away from the flange 7. Thereby, a tensioning force is applied to the tensioning rod 3 held by the grip of the gripping rams. Due to the action of the pressure sequence valve 37 the movement of the gripping rams 21 away from the flange 7 does not start before a considerably high pressure is present in the cylinders 19 so as to provide a sufficient gripping force acting on the tensioning rod 3. By this measure the tensioning tool 1 can be prevented from slipping off the tensioning rod when the hydraulic cylinders 14 of the tensioning rams 13 are pressurised.

The pump 29 may simply be a hand pump with a pressure hold and release valve. To release the pressure from the tensioning tool 1 therefore, the pressure hold and release valve of the pump 29 only needs to be opened.

However, the pressure in the tensioning tool is held high until the nut 11 is so screwed onto the tensioning rod as to abut the stub 9.

## Claims

1. A tensioning tool (1) for tensioning a tensioning rod (3) of a turbine rotor where the tensioning rod extends through a flange (7) of the rotor and is equipped with a circumferential face at or near an axial end of the tensioning rod which comprises at least two gripping areas (23), the tool (1) comprising:
- a gripping arrangement (19, 21) which is designed such as to apply a radial gripping force to the gripping areas (23); and
- at least one tensioning ram (13) which is arranged and designed such as to allow it to be pressed against the flange (7) of the rotor;
where the gripping arrangement (19, 21) is linked to the at least one tensioning ram (13) so that it moves in the longitudinal direction of the tensioning rod (3) when the tensioning ram (13) is actuated.

2. The tensioning tool (1) as claimed in claim 1, in which the gripping arrangement comprises gripping faces which are configured complementary the configuration of gripping areas.

3. The tensioning tool (1) as claimed in claim 1 or claim 2, in which the gripping arrangement comprises at least two gripping rams (21) which are arranged and designed such as to allow them to be pressed against the gripping areas (23) in the radial direction of the tensioning rod (3).

4. The tensioning tool (1) as claimed in 3, which comprises at least three gripping rams(21).

5. The tensioning tool (1) as claimed in any of the preceding claims, in which the at least one tensioning ram (13) and/or the gripping arrangement (19, 21) is/are actuated by hydraulic pressure.

6. The tensioning tool (1) as claimed in claim 5, in which the gripping arrangement (19, 21) and the at lest one tensioning ram (13) are supplied with a hydraulic fluid of the same pressure.

7. The tensioning tool (1) as claimed in claim 6, comprising a conduit system (27, 31, 33, 35) for delivering the pressurised hydraulic fluid to the gripping arrangement (19, 21) and to the at least one tensioning ram (13), wherein the conduit system (27, 31, 33, 35) comprises a first branch (31) leading to the gripping arrangement and a second branch (33) leading to the at least one tensioning ram (13) and wherein a valve (37) is present in the second branch (33) which is designed such as to open the second branch (33) as soon as the pressure in the hydraulic fluid exceeds a predefined value.

8. The tensioning tool (1) as claimed in claim 7, in which the valve is a pressure sequence valve (37).

9. The tensioning tool (1) as claimed in claim 7 or claim 8, in which the conduit system (27, 31, 33, 35) comprises a third branch (35) which runs parallel to the second branch (33) and which comprises a check valve.

10. A tensioning rod (3) for a turbine rotor where the tensioning rod (3) comprises an axial end (4) and a circumferential face at or near the axial end which is equipped with at least two gripping areas (23).

11. The tensioning rod (3) as claimed in claim 10, in which the circumferential face is equipped with at least three gripping areas (23).

12. The tensioning rod (3) as claimed in claim 10 or claim 11, in which the gripping areas are flat, concave, convex, square or circular areas.

13. The tensioning rod (3) as claimed in any of the claims 10 to 12, in which the gripping areas comprise teeth, pins or keys.

14. The tensioning rod (3) as claimed in any of the claims 10 to 13, in which the gripping areas are inclined towards the centre and/or towards the axial end of the tensioning rod.
